Europäisches Patentamt

European Patent Office

Office européen des brevets

(11) Veröffentlichungsnummer : **0 437 824 B1**

(12) **EUROPÄISCHE PATENTSCHRIFT**

(45) Veröffentlichungstag der Patentschrift :
**11.08.93 Patentblatt 93/32**

(51) Int. Cl.⁵ : **C01B 21/094**

(21) Anmeldenummer : **90125362.5**

(22) Anmeldetag : **22.12.90**

(30) Priorität : **16.01.90 DE 4001028**

(43) Veröffentlichungstag der Anmeldung :
**24.07.91 Patentblatt 91/30**

(45) Bekanntmachung des Hinweises auf die
Patenterteilung :
**11.08.93 Patentblatt 93/32**

(84) Benannte Vertragsstaaten :
**AT BE CH DE ES FR GB IT LI NL SE**

(56) Entgegenhaltungen :
**DE-B- 1 076 090**
**DE-B- 1 111 158**
**DE-C- 850 445**
**FR-A- 1 558 105**

(54) **Verfahren zur Herstellung von Nitrosylschwefelsäure.**

(56) Entgegenhaltungen :
**PATENT ABSTRACTS OF JAPAN vol. 3, no. 14
(C-36)() 8 Februar 1979, & JP-A-53 138997 (SU-
MITOMO KAGAKU KOGYO) 12 April 1978,**
**PATENT ABSTRACTS OF JAPAN vol. 2, no. 93
(C-019)() 29 Juli 1978, & JP-A-53 056186 (SUMI-
TOMO KAGAKU KOGYO) 22 Mai 1978,**

(73) Patentinhaber : **HOECHST
AKTIENGESELLSCHAFT
W-6230 Frankfurt am Main 80 (DE)**

(72) Erfinder : **Dorsch, Bernd, Dr. Dipl.-Chem.
Friedenstrasse 46c
W-4250 Bottrop-Kirchhellen (DE)**
Erfinder : **Hibbel, Josef, Dipl.-Ing.
Bruchsteg 13
W-4200 Oberhausen 11 (DE)**
Erfinder : **Denkmann, Klaus, Dipl.-Ing.
Elsenbruch 1a
W-4200 Oberhausen 11 (DE)**
Erfinder : **Ulrichs, Klaus, Dr. Dipl.-Chem.
Rüsterweg 1
W-4200 Oberhausen 11 (DE)**

## Beschreibung

Die Erfindung betrifft ein Verfahren zur Herstellung von Nitrosylschwefelsäure durch Umsetzung von nitrosen Gasen mit Schwefelsäure in einer Flüssigkeitsringpumpe.

Nitrosylschwefelsäure ist ein in der organischen Chemie vielfach genutztes Reagenz zum Diazotieren und Nitrieren solcher organischer Verbindungen, bei denen unter Ausschluß von Wasser gearbeitet werden muß. Üblicherweise wird in diesen Fällen die Nitrosylschwefelsäure als Lösung in konzentrierter Schwefelsäure eingesetzt. Um unerwünschte Nebenreaktionen auszuschließen, muß Nitrosylschwefelsäure sehr rein sein. Sie darf insbesondere keine Salpetersäure enthalten, die sich nach folgender Reaktion bildet

$$H_2SO_4 + 2NO_2 \rightleftarrows [NO]HSO_4 + HNO_3$$

Zur Herstellung von Nitrosylschwefelsäure in Substanz oder in schwefelsaurer Lösung sind verschiedene Verfahren bekannt. So werden nach der DE-B-11 11 158 nitrose Gase aus der Ammoniakverbrennung, deren Oxidationsgrad der Stufe $N_2O_3$ entspricht, in einem röhrenförmigen Absorber im Gegenstrom zu Schwefelsäure geleitet. Die Reaktionswärme wird durch indirekte Kühlung stufenweise abgeführt, aus dem Absorber entnimmt man kontinuierlich eine Lösung mit 40 bis 45 % Nitrosylschwefelsäure.

In der DD-A-237 157 wird ein Verfahren zur Herstellung von Nitrosylschwefelsäure beschrieben, das von $N_2O_3$ ausgeht. Man erhält das Distickstofftrioxid durch Umsetzung von Kupfer mit konzentrierter Salpetersäure und läßt es anschließend mit konzentrierter Schwefelsäure reagieren.

Hochreine, zur Diazotierung geeignete Nitrosylschwefelsäure gewinnt man entsprechend der veröffentlichten japanischen Patentanmeldung 78 56186 durch Umsetzung eines $NO/NO_2$ im Molverhältnis 1,0 bis 1,1 enthaltenden Gases mit konzentrierter oder rauchender Schwefelsäure.

Ein anderer Weg zur Gewinnung salpetersäurefreier Nitrosylschwefelsäure wird nach der Arbeitsweise der DE-A-27 06 311 beschritten. Man läßt Salpetersäure in Schwefelsäure mit Schwefel reagieren und entfernt in der Lösung verbleibende freie Salpetersäure durch Zusatz eines Lactons.

Ebenfalls von Salpetersäure als Stickstoffverbindung geht das in der US-A-33 99 034 beschriebene Verfahren zur Herstellung von Nitrosylschwefelsäure aus. Die Reduktion der Salpetersäure erfolgt bei diesem Prozeß durch Schwefeldioxid, das im Überschuß verwendet wird, um die Salpetersäure restlos zu entfernen.

Allen bekannten Verfahren ist gemeinsam, daß sie besondere Vorkehrungen treffen müssen, um eine Verunreinigung der Nitrosylschwefelsäure oder deren Lösung durch Salpetersäure auszuschließen. Entweder ist dafür Sorge zu tragen, daß die zur Umsetzung mit Schwefelsäure verwendeten nitrosen Gase genau oder zumindest annähernd genau der Zusammensetzung $N_2O_3$ entsprechen, oder man reduziert in Schwefelsäure gelöste Salpetersäure mit Schwefel oder Schwefeldioxid und entfernt nicht umgesetzte Salpetersäure durch Zusatz bestimmter Hilfsstoffe oder überschüssigen Reduktionsmittels. Diese erforderlichen Vorkehrungen mindern die Flexibilität der Prozesse, insbesondere hinsichtlich der Einsatzstoffe oder sie beeinträchtigen ihre Wirtschaftlichkeit.

Es bestand daher die Aufgabe eine Arbeitsweise zu entwickeln, die die Nachteile des Standes der Technik vermeidet, hinsichtlich der Einsatzstoffe keine besonderen Anforderungen stellt und einfach durchzuführen ist.

Die Erfindung besteht in einem Verfahren zur Herstellung von Nitrosylschwefelsäure durch Umsetzung nitroser Gase mit Schwefelsäure. Es ist dadurch gekennzeichnet, daß die Umsetzung in einer Flüssigkeitsringpumpe erfolgt.

Flüssigkeitsringpumpen sind dem Fachmann bekannt. Sie bestehen im wesentlichen aus einem zylindrischen Gehäuse und einer Welle, die ein Rad mit radial angeordneten Schaufeln trägt. Die Welle ist exzentrisch gelagert, so daß die Schaufeln des Rades an einer Stelle einen sehr geringen Abstand zur Gehäuseinnenwand haben. Die Pumpe arbeitet unter Zuhilfenahme einer Flüssigkeit, die bei Drehung des Schaufelrades durch Fliehkraft einen Flüssigkeitsring bildet. Dieser paßt sich der äußeren Gehäuseform an, so daß innen zwischen Welle und Schaufel eine Anzahl sichelförmiger Hohlräume als Saug- bzw. Druckraum entsteht. Das angesaugte, fluide Medium ist durch den Flüssigkeitsring in den Hohlräumen abgeschlossen und wird unter Verdichtung auf den anstehenden Gegendruck der Drucköffnung zugeführt. Flüssigkeitsringpumpen dienen sowohl zur Förderung von Gasen als auch von Flüssigkeit.

Im erfindungsgemäßen Verfahren wird die Flüssigkeitsringpumpe als Reaktor verwendet. Sie saugt die nitrosen Gase an, fördert sie und bringt sie in Kontakt mit dem Flüssigkeitsring. Der Flüssigkeitsring wird von der Schwefelsäure gebildet, die gleichzeitig die nitrosen Gase unter Bildung von Nitrosylschwefelsäure absorbiert. Unter dem Begriff nitrose Gase werden Gemische verstanden, die NO und $NO_2$ und gegebenenfalls Sauerstoff enthalten und darüber hinaus weitere gasförmige Bestandteile, die gegenüber Stickstoffoxid, Stickstoffdioxid und Schwefelsäure inert sind.

Der Einsatz von Flüssigkeitsringpumpen als Reaktoren für Gas-Flüssigkeits-Reaktionen ist zwar aus der deutschen Patentschrift 1 076 090 bekannt. Ihre Verwendung bei der Umsetzung von nitrosen Gasen mit Schwefelsäure ist aber neu.

Es war auch nicht vorhersehbar, daß die Durchführung der Umsetzung in einer Flüssigkeitsringpumpe den Einsatz von nitrosen Gasen erlaubt, die NO und $NO_2$ in Molverhältnissen enthalten, die in weiten Bereichen variieren können. Daher ist das neue Verfahren überaus flexibel und paßt sich ohne Schwierigkeiten Einsatzstoffen unterschiedlicher Herkunft an. Es hat sich bewährt, Gasgemische einzusetzen, die NO und $NO_2$ im Molverhältnis von 2 zu 1 bis 1 zu 1 und vorzugsweise von 1,1 zu 1 bis 1 zu 1 und insgesamt in einem Anteil von 5 bis 15, vorzugsweise von 10 bis 15 Vol.-% und ferner Sauerstoff und Inerte enthalten. Der Inertengehalt kann bis zu 95, vorzugsweise 85 bis 90 Vol.-% betragen. Wegen ihrer leichten Verfügbarkeit kommen als Einsatzstoffe insbesondere durch katalytische Ammoniakverbrennung hergestellte nitrose Gase in Betracht. Im Gegensatz zu anderen Nitrosylschwefelsäure-Herstellungsverfahren ist es aber nicht erforderlich, z.B. durch Zumischen von Sauerstoff oder Einstellen präziser Temperaturbereiche ein bestimmtes $NO/NO_2$-Verhältnis aufrechtzuerhalten.

Das neue Verfahren läßt sich in weiten Druckbereichen anwenden. Die nitrosen Gase werden der Saugseite der Flüssigkeitsringpumpe unter Normaldruck, vermindertem oder erhöhtem Druck zugeführt. Es hat sich bewährt, wenn der Druck der Einsatzstoffe an der Saugseite zwischen etwa 0,02 und 0,5 MPa beträgt. Im allgemeinen reicht es aus, wenn an der Druckseite der Druck um etwa 0,02 MPa höher ist als an der Saugseite (Gegendruck der Gasabführleitung).

Als Umlaufflüssigkeit wird in der Flüssigkeitsringpumpe erfindungsgemäß Schwefelsäure, also der Reaktionspartner der nitrosen Gase verwendet. Ihre Konzentration kann in einem weiten Bereich frei gewählt werden. So ist rauchende Schwefelsäure, die bis zu etwa 65 Gew.-% freies $SO_3$ enthält, als Umlaufflüsigkeit und Reaktant ebenso geeignet wie Schwefelsäure, die 95 und mehr Gew.-% $H_2SO_4$ enthält.

Die Umsetzung von nitrosem Gas und Schwefelsäure vollzieht sich bei Temperaturen von 30 bis 70°C. Besonders zweckmäßig ist es, Temperaturen von 40 bis 60°C einzuhalten. Zur Abführung der Reaktionswärme ist im Flüssigkeitsumlauf ein Kühler vorzusehen.

Die neue Arbeitsweise wird diskontinuierlich, bevorzugt jedoch kontinuierlich durchgeführt. Die in Schwefelsäure gelöste Nitrosylschwefelsäure wird, sobald die Lösung die gewünschte Konzentration erreicht hat, aus dem Flüssigkeitskreislauf im Maße ihrer Entstehung ausgeschleust, neue Schwefelsäure über eine Dosiervorrichtung der Pumpe wieder zugeführt.

Das Abgas verläßt die als Reaktor verwendete Flüssigkeitsringpumpe auf der Druckseite. Es kann nach Ersatz der verbrauchten Stickstoffoxide wieder in den Reaktor eingeleitet oder einer anderen Verwendung, z.B. der Herstellung von Salpetersäure, zugeführt werden.

Das erfindungsgemäße Verfahren ermöglicht es, Lösungen von Nitrosylschwefelsäure in Schwefelsäure beliebiger Konzentration herzustellen, die obere Grenze liegt bei einer Konzentration von etwa 65 Gew.-% Nitrosylschwefelsäure (bezogen auf die Lösung). Die Lösungen sind frei von Salpetersäure.

Der folgende Versuch erläutert den neuen Prozeß beispielhaft, beschränkt ihn jedoch nicht auf diese beschriebene Ausführungsform.

Der Versuch wurden unter Verwendung einer Flüssigkeitsringpumpe mit einer maximalen Förderleistung von etwa 80 m³/h (Hersteller der Pumpe: Fa. SIHI) durchgeführt.

Versuch

Der Flüssigkeitsringpumpe wurden unter einem Druck von 0,09 MPa 77,8 Nm³/h eines auf etwa 30°C erwärmten Gasgemisches der Zusammensetzung

| | |
|---|---|
| Inerte | 83 Vol.-% |
| Sauerstoff | 4 Vol.-% |
| $No_x$ (NO : $NO_2$ = 2 : 1) | 13 Vol.-% |

zugeführt. Als Umlaufflüssigkeit diente konzentrierte Schwefelsäure (etwa 95 Gew.-% $H_2SO_4$), der Flüssigkeitsumlauf betrug etwa 350 l/h. Durch die Reaktion verbrauchte Schwefelsäure wurde kontinuierlich ergänzt. Die Temperatur in der Pumpe wurde durch Kühlung der umlaufenden Flüssigkeit auf etwa 60°C eingestellt. Unter diesen Bedingungen erhielt man je Stunde 60 bis 62 kg einer Lösung von etwa 40 Gew.-% $[NO]HSO_4$ in Schwefelsäure (bezogen auf die Lösung). Das Produkt enthielt keine Salpetersäure.

## Patentansprüche

1. Verfahren zur Herstellung von Nitrosylschwefelsäure durch Umsetzung nitroser Gase mit Schwefelsäure, dadurch gekennzeichnet, daß die Umsetzung in einer Flüssigkeitsringpumpe erfolgt.

2. Verfahren nach Anspruch 1, dadurch gekennzeichnet, daß Gasgemische eingesetzt werden, die NO und

NO$_2$ im Molverhältnis von 2 zu 1 bis 1 zu 1 und vorzugsweise von 1,1 zu 1 bis 1 zu 1 und daneben Sauerstoff und Inerte enthalten.

3. Verfahren nach Anspruch 2, dadurch gekennzeichnet, daß der Inertengehalt der Gasgemische bis zu etwa 95 und vorzugsweise 85 bis 90 Vol.-% beträgt.

4. Verfahren nach einem oder mehreren der Ansprüche 1 bis 3, dadurch gekennzeichnet, daß als Schwefelsäure rauchende Schwefelsäure, die bis zu etwa 65 Gew.-% freies SO$_3$ enthält, verwendet wird.

5. Verfahren nach einem oder mehreren der Ansprüche 1 bis 3, dadurch gekennzeichnet, daß Schwefelsäure, die 95 und mehr Gew.-% H$_2$SO$_4$ enthält, verwendet wird.

6. Verfahren nach einem oder mehreren der Ansprüche 1 bis 5, dadurch gekennzeichnet, daß der Druck an der Saugseite der Flüssigkeitsringpumpe 0,02 bis 0,5 MPa beträgt.

7. Verfahren nach einem oder mehreren der Ansprüche 1 bis 6, dadurch gekennzeichnet, daß die Umsetzung bei Temperaturen von 30 bis 70, vorzugsweise bei 40 bis 60°C durchgeführt wird.


**Claims**

1. A process for producing nitrosylsulfuric acid by reacting nitrous gases with sulfuric acid, wherein the reaction is carried out in a liquid-ring pump.

2. The process as claimed in claim 1, wherein gas mixtures are used which contain NO and NO$_2$ in a molar ratio from 2:1 to 1:1 and preferably from 1.1:1 to 1:1 and additionally oxygen and inerts.

3. The process as claimed in claim 2, wherein the inerts content of the gas mixtures is up to about 95 and preferably 85 to 90% by volume.

4. The process as claimed in one or more of claims 1 to 3, wherein the sulfuric acid used is fuming sulfuric acid which contains up to about 65% by weight of free SO$_3$.

5. The process as claimed in one or more of claims 1 to 3, wherein sulfuric acid which contains 95% by weight of H$_2$SO$_4$ and more is used.

6. The process as claimed in one or more of claims 1 to 5, wherein the pressure on the suction side of the liquid-ring pump is 0.02 to 0.5 MPa.

7. The process as claimed in one or more of claims 1 to 6, wherein the reaction is carried out at temperatures from 30 to 70°C, preferably at 40 to 60°C.


**Revendications**

1. Procédé pour la fabrication d'acide nitrosylsulfurique par réaction de vapeurs nitreuses avec l'acide sulfurique, caractérisé en ce que la réaction se produit dans une pompe à anneau liquide.

2. Procédé selon la revendication 1, caractérisé en ce que l'on utilise des mélanges gazeux qui contiennent NO et NO$_2$ dans un rapport molaire de 2:1 à 1:1, et de préférence de 1,1:1 à 1:1 et en plus de l'oxygène et des produits inertes.

3. Procédé selon la revendication 2, caractérisé en ce que la teneur en produits inertes des mélanges gazeux est jusqu'à environ 95 % en volume et de préférence de 85 à 90 % en volume.

4. Procédé selon une ou plusieurs des revendications 1 à 3, caractérisé en ce que l'on utilise comme acide sulfurique de l'acide sulfurique fumant qui contient jusqu'à environ 65 % en poids de SO$_3$ libre.

5. Procédé selon une ou plusieurs des revendications 1 à 3, caractérisé en ce que l'on utilise de l'acide sulfurique qui contient 95 % en poids et plus de H$_2$SO$_4$.

6. Procédé selon une ou plusieurs des revendications 1 à 5, caractérisé en ce que la pression du côté aspiration de la pompe à anneau liquide est de 0,02 à 0,5 MPa.

7. Procédé selon une ou plusieurs des revendications 1 à 6, caractérisé en ce que la réaction est mise en oeuvre à des températures de 30 à 70°C, de préférence à 40-60°C.